# NEUE EUROPÄISCHE PATENTSCHRIFT

(11) **EP 3 035 773 B2**
(45) Veröffentlichungstag und Bekanntmachung des Hinweises auf die Entscheidung über den Einspruch: **30.11.2022**
(45) Hinweis auf die Patenterteilung: 21.08.2019
(21) Anmeldenummer: 15198454.9
(22) Anmeldetag: 08.12.2015
(51) Int. Cl.: H05B 6/66, H05B 6/64, H05B 6/70, H05B 6/72

(54) **MIKROWELLENGENERATOR UND MIKROWELLENOFEN**
MICROWAVE GENERATOR AND MICROWAVE OVEN
GENERATEUR DE MICRO-ONDES ET FOUR A MICRO-ONDES

(30) Priorität: 17.12.2014 DE 102014226280
(43) Veröffentlichungstag der Anmeldung: 22.06.2016
(73) Patentinhaber: E.G.O. Elektro-Gerätebau GmbH, 75038 Oberderdingen (DE)
(72) Erfinder: Baier, Martin, 76275 Ettlingen (DE); Frank, Marcus, 75038 Oberderdingen (DE); Riffel, Roman, 76646 Bruchsal-Heidelsheim (DE)
(74) Vertreter: Patentanwälte Ruff, Wilhelm, Beier, Dauster & Partner mbB

(56) Entgegenhaltungen:
- EP-A1- 2 306 785
- WO-A1-2014/147384
- WO-A2-2013/140266
- CN-A- 102 769 952
- DE-A1- 3 104 677
- US-A- 5 558 800

## Beschreibung

### Anwendungsgebiet und Stand der Technik

Die vorliegende Erfindung betrifft einen Mikrowellengenerator für einen Mikrowellenofen sowie einen Mikrowellenofen mit einem solchen Mikrowellengenerator.

Ein Mikrowellengenerator basiert derzeit typischerweise auf einem Magnetron, um Mikrowellen zu erzeugen. Dieser hat jedoch den Nachteil, dass er nur Wellen mit einer festgelegten Wellenlänge aussenden kann. Im Garraum bzw. in der Kavität eines Mikrowellenofens kann es somit zu stehenden Wellen kommen, die ihre Maxima stets an den gleichen Stellen haben. Im Gargut können somit heiße und kalte Bereiche entstehen, welche im ersten Fall übergart werden können, im zweiten Fall kalt bleiben können. Des Weiteren lässt sich die Leistung eines Mikrowellengenerators mit Magnetron nicht kontinuierlich einstellen. Es ist lediglich eine Leistungseinstellung durch Variation der Einschaltdauer im Intervallbetrieb möglich. Verbessert werden kann die Leistungseinstellung beispielsweise durch die Ansteuerung des Magnetrons mit einem Inverter anstatt mit einer Hochspannungsquelle. Eine Variation der Wellenlänge ist jedoch auch in diesem Fall nicht möglich.

Eine Weiterentwicklung eines Magnetron-basierten Mikrowellengenerators sind Halbleitermikrowellengeneratoren, bei welchen Mikrowellen über eine Elektronik mit Leistungstransistoren erzeugt werden. Ein derartiger Mikrowellengenerator ist beispielsweise aus der WO 2013/063985 A1 bekannt. Damit können sowohl Frequenz als auch Leistung variiert werden. Der Wärmeeintrag in das Gargut lässt sich auf diese Weise vorgeben und die Wärmeverteilung wird verbessert. Zusätzlich wird im Vergleich zu Magnetronen der Vorteil erreicht, dass die in das Gargut eingebrachte Leistung gemessen werden kann.

Mikrowellengeneratoren auf Halbleiterbasis sind heutzutage grundsätzlich bekannt, jedoch fehlt es bislang an Endgeräten für Verbraucher. Dies liegt insbesondere daran, dass die Herstellungskosten bislang zu hoch sind.

Aus der US 5,558,800 A ist ein Mikrowellengerät samt Mikrowellengenerator bekannt, das an mehreren Stellen einer zu beheizenden Kavität Antennen aufweisen kann. Dabei ist in einem unteren Bereich des Mikrowellengeräts eine zentrale Leistungsversorgung vorgesehen.

Aus der WO 2013/140266 A2 und der der EP 2 306 785 A1 sind allgemein Mikrowellengeräte bekannt mit einem Mikrowellengenerator.

Die WO 2014/147384 A1 zeigt ein Mikrowellengerät mit einer Kavität und mehreren Halbleiter-Mikrowellengeneratoren. Antennen für das Mikrowellengerät können an der Seite der Kavität vorgesehen sein.

Aus der CN 102769952 A ist ein Mikrowellengenerator für ein Mikrowellengerät bekannt, der einen Kühlkörper aufweist, an dem ein Lüfter befestigt ist.

Aus der EP 2434837 A1 ist ein Mikrowellengerät mit einem Mikrowellengenerator bekannt, wobei der Mikrowellengenerator sehr allgemein beschrieben wird. Der Mikrowellengenerator soll dabei Mittel zur Ableitung von Wärme wie beispielsweise eine Kühlfahne aufweisen. So soll Wärme abgeleitet werden, die von Halbleiterelementen in einer Leistungselektronik erzeugt wird.

Aus der US 2011/0168699 A1 ist ein weiteres Mikrowellengerät mit einem Mikrowellengenerator bekannt. Details zu einem konkreten Aufbau des Mikrowellengenerators oder speziell zu einer Kühlung von Bauteilen sind darin nicht erläutert.

Aus der EP 2953425 A1 ist ein weiteres Mikrowellengerät mit einem Mikrowellengenerator bekannt, wobei mehrere Kanäle zur Erzeugung von Mikrowellen enthalten sind. Jeder Kanal kann einzeln angesteuert werden. Details zu einem konkreten Aufbau des Mikrowellengenerators sind daraus nicht ersichtlich.

Aus der EP 2051564 A1 ist ein Mikrowellengerät mit einem Mikrowellengenerator bekannt. Zum Aufbau des Mikrowellengenerators werden Kühlkörper offenbart, an denen metallische Gehäuseteile angeordnet sind, die Leiterplatten aufweisen. Des Weiteren sind sehr hitzebeständige Leistungsverstärker im Mikrowellengenerator enthalten.

Aus der JP 2009-252346 A ist ein Mikrowellengerät mit einem Mikrowellengenerator bekannt, der Halbleiterbauelemente für Leistungsverstärker aufweist. Zu deren Kühlung sind Hitzeabstrahlungsmittel vorgesehen, die nicht näher konkretisiert sind.

Aus der WO 2011/138688 A2 und der JP 59-99693 A sind jeweils Mikrowellengeräte mit einem Mikrowellengenerator bekannt. Der Mikrowellengenerator weist Halbleiterbauelemente für Leistungsverstärker auf, ohne dass aber hierzu nähere Details offenbart werden.

Aus der WO 2014/147384 A1 ist ein Mikrowellengerät mit einem RF-Halbleitergenerator bekannt. An den RF-Halbleitergenerator sind mehrere Leiterplatten angeschlossen, auf welchen RF-Antennenmodule angeordnet sind. Die Leiterplatten sind außen an einem Innenraum angeordnet, in dem ein Gegenstand mittels Mikrowellen erwärmt werden kann. Antennen zum Ausstrahlen dieser Mikrowellen sind in dem Innenraum angeordnet und auf nicht näher erläuterte Art und Weise mit den RF-Antennenmodulen bzw. mit den Leiterplatten durch eine Wand um den Innenraum hindurch elektrisch verbunden.

### Aufgaben und Lösung

Es ist deshalb Aufgabe der Erfindung, einen Mikrowellengenerator zu schaffen, welcher im Vergleich zu aus dem Stand der Technik bekannten Mikrowellenge-neratoren verbessert ist, insbesondere hinsichtlich seiner Herstellungskosten günstiger ist. Es ist des Weiteren eine Aufgabe der Erfindung, einen Mikrowellenofen mit einem solchen Mikrowellengenerator zu schaffen.

Gelöst wird diese Aufgabe durch einen Mikrowellengenerator mit den Merkmalen des Anspruchs 1 sowie durch einen Mikrowellenofen mit den Merkmalen des Anspruchs 10. Vorteilhafte sowie bevorzugte Ausgestaltungen der Erfindung sind Gegenstand der weiteren Ansprüche und werden im Folgenden näher erläutert. Dabei werden manche der Merkmale nur für den Mikrowellengenerator oder nur für den Mikrowellenofen beschrieben. Sie sollen jedoch unabhängig davon jedoch sowohl für den Mikrowellengenerator als auch für den Mikrowellenofen selbstständig gelten können. Der Wortlaut der Ansprüche wird durch ausdrückliche Bezugnahme zum Inhalt der Beschreibung gemacht.

Der Mikrowellengenerator weist zumindest einen ersten Kanal und einen zweiten Kanal auf, unter Umständen sogar drei Kanäle oder noch mehr. Der erste Kanal weist eine erste Verstärkerschaltung und eine daran angeschlossene erste Antenne zur Erzeugung von Mikrowellen mit einer Leistung bis zu maximal einer ersten Teilleistung auf. Der zweite Kanal weist eine zweite Verstärkerschaltung und eine daran angeschlossene zweite Antenne zur Erzeugung von Mikrowellen mit einer Leistung bis zu maximal einer zweiten Teilleistung auf. Eine maximale Gesamtleistung des Mikrowellengenerators setzt sich aus der Summe der Teilleistungen seiner Kanäle zusammen.

Durch die erfindungsgemäße Ausgestaltung mit der Aufteilung in mindestens zwei oder mehr Kanäle muss jeder Kanal nur einen Teil der insgesamt abzugebenden Mikrowellenleistung zur Verfügung stellen. Beispielsweise kann bei einer baugleichen Ausführung der einzelnen Kanäle jeder Kanal jeweils die Hälfte der insgesamt abzugebenden Leistung erbringen. Dies reduziert die jeweilige Verlustleistung und erhöht damit die Energieeffizienz. Auch die Komplexität im Aufbau wird dadurch im Vergleich zu einem einzigen Kanal mit entsprechend höherer Leistung verringert. Trotzdem können die Kanäle auf die gleiche Peripherie zurückgreifen, beispielsweise Steuerung und/oder Kühlung. Des Weiteren können die beiden Kanäle mit unterschiedlichen Frequenzen betrieben werden, wodurch die Anzahl von Moden in einer Kavität eines Mikrowellenofens erhöht werden kann. Auch die Phasenlagen der Kanäle relativ zueinander können variiert werden, insbesondere bei Betrieb der beiden Kanäle mit der gleichen Frequenz. Die Gleichmäßigkeit der Wärmeverteilung kann damit verbessert werden.

Der erfindungsgemäße Mikrowellengenerator ist insbesondere für Einbau-Kombi-Geräte geeignet bzw. auch der Mikrowellenofen kann als Kombi-Gerät ausgebildet sein, also auch die Funktionalität eines reinen Backofens aufweisen. Ein solches Gerät kann von außen aussehen wie ein normaler europäischer Backofen. Es verfügt jedoch neben den konventionellen Widerstandsheizungen zusätzlich über eine Mikrowellenheizung, welche von dem Mikrowellengenerator bereitgestellt wird.

Unter einem Kanal kann hier grundsätzlich eine Einheit verstanden werden, welche der eigenständigen Erzeugung und Abstrahlung von Mikrowellen dient. Hierzu können neben den bereits beschriebenen Verstärkerschaltungen und Antennen auch weitere Komponenten wie beispielsweise ein jeweiliger Oszillator vorhanden sein. Diese Komponenten können jedoch grundsätzlich auch von mehreren Kanälen geteilt werden.

Gemäß einer Ausführung weist der Mikrowellengenerator eine Anzahl weiterer Kanäle auf, wobei jeder weitere Kanal einejeweilige Verstärkerschaltung und eine jeweilige daran angeschlossene Antenne zur Erzeugung von Mikrowellen mit einer Leistung bis zu maximal einer jeweiligen Teilleistung aufweist. Damit kann die Gesamtleistung auf noch mehr Kanäle aufgeteilt werden, was die Energieeffizienz noch weiter erhöhen kann.

Gemäß einer weiteren Ausführung sind einige Kanäle, vorzugsweise alle, zueinander baugleich. Dies kann Herstellung und Steuerung vereinfachen. Bevorzugt weisen die Verstärkerschaltungen jeweils eine Anzahl von Transistoren auf, insbesondere Leistungstransistoren, zur Erzeugung oder Verstärkung eines die jeweilige Antenne betreibenden Stroms. Damit kann auf Halbleitertechnologie für die Verstärkerschaltungen zurückgegriffen werden. Insbesondere kann es sich bei solchen Transistoren um LDMOS (Laterally Diffused Metal Oxide Semiconductor)-Transistoren handeln, die sich für typische Einsatzzwecke als vorteilhaft erwiesen haben. Die jeweilige Verstärkerschaltung kann insbesondere zweistufig ausgeführt sein. Auch dies hat sich als zweckmäßig erwiesen.

Erfindungsgemäß weist jeder Kanal eine jeweilige Leistungsmessschaltung zur Messung einer vom Kanal abgegebenen Leistung auf. Dies ermöglicht eine Überwachung der jeweils abgegebenen Leistung. An der Leistungsmessschaltung kann insbesondere ein Zirkulator angeschlossen sein, an welchem des Weiteren die jeweilige Antenne und eine jeweilige weitere Leistungsmessschaltung zur Messung einer reflektierten Leistung angeschlossen sind. Dies ermöglicht es, nicht nur die abgegebene, sondern auch die reflektierte Leistung zu messen. Damit kann auf die Leistung geschlossen werden, welche tatsächlich in das Gargut abgegeben wird. Somit wird erfindungsgemäß eine Regelschleife aufgebaut, beispielsweise um eine bestimmte gewünschte bzw. vorgegebene Leistung in das Gargut einzubringen.

Die Verstärkerschaltungen sind erfindungsgemäß auf einer gemeinsamen Verstärkerplatine angeordnet. Dies ermöglicht eine einfache Ausführung, insbesondere auch eine erleichterte bzw. verbesserte Kühlung. Eine Verstärkerplatine ist bevorzugt unmittelbar an einem Kühlkörper des Mikrowellengenerators montiert, vorzugsweise an einer ebenen Unterseite des Kühlkörpers. Dies hat sich für den Zweck der Wärmeableitung als vorteilhaft erwiesen. Auch dies erhöht die Energieeffizienz aufgrund verbesserter Kühlung der Komponenten, insbesondere von Leistungstransistoren.

Erfindungsgemäß ist dem Kühlkörper ein Lüfter zugeordnet, welcher weiter bevorzugt von einer mit der Verstärkerplatine verbundenen Steuerplatine elektrisch versorgt wird. Dieser Lüfter kann insbesondere Luft am Kühlkörper entlang bzw. durch den Kühlkörper blasen, um somit Wärme noch besser abzuführen.

An dem Kühlkörper sind erfindungsgemäß eine Steuerplatine, die Antennen und ein Lüfter montiert. Somit können diese ebenfalls in vorteilhafter Weise gekühlt werden. Antennen sind dabei bevorzugt direkt an dem Kühlkörper angeschraubt. So kann der Kühlkörper gleichzeitig eine Halteeinrichtung bilden. In den Kühlkörper können auch Befestigungsgeometrien für andere Komponenten integriert werden. Dies erleichtert die Montage und senkt die Kosten. Der Kühlkörper besteht bevorzugt aus Aluminium und ist weiter bevorzugt als Extrusionsprofil hergestellt. Ein Lüfter ist bevorzugt über einen jeweiligen Halter an dem Kühlkörper befestigt, vorzugsweise einen Halter aus Kunststoff.

Bevorzugt sind die Antennen unmittelbar an einem Ende des Kühlkörpers angebracht. Insbesondere sind sie direkt bzw. ohne Flanschblech odgl. am Kühlkörper angebracht. Erfindungsgemäß sind die Antennen mit den jeweiligen Verstärkerschaltungen direkt verdrahtet, so dass sie ohne Zwischenschaltung von Koaxialsteckern und Koaxialkabeln angeschlossen sind. Im Vergleich zu bekannten Ausführungen mit koaxialen Verbindungsstücken, mit welchen Mikrowellen aus einem Gehäuse herausgeführt und über Koaxialleitungen zu den Antennen geführt werden, reduziert dies die Komplexität des Aufbaus und damit auch die Kosten. Eine Leistungsmessschaltung kann zwischen Verstärkerschaltung und Antenne angeordnet sein, wobei in diesem Fall die Antenne direkt mit der Leistungsmessschaltung verdrahtet sein kann. Dies sei vorliegend als direkte Verdrahtung der Antenne mit der Leistungsmessschaltung verstanden. Insbesondere kann eine jeweilige Antenne durch eine jeweilige Bohrung im Kühlkörper angeschlossen werden.

Der Mikrowellengenerator ist bevorzugt dazu ausgebildet, die Kanäle mit unterschiedlichen Frequenzen und/oder unterschiedlichen Phasen zu betreiben. Damit kann die Anzahl der Moden in einer Kavität, in welche die Mikrowellen abgestrahlt werden, erhöht werden zur gleichmäßigeren Erwärmung eines Garguts darin.

Die Antennen können vorteilhaft zusammen eine Phased-Array-Antenne bilden, wobei der Mikrowellengenerator bevorzugt dazu ausgebildet ist, eine Ausbreitungsrichtung von Mikrowellen, welche von der Phased-Array-Antenne abgestrahlt werden, über Phasenbeziehungen der Kanäle zueinander einzustellen. Eine Phased-Array-Antenne ist hier eine Anordnung von mehreren Antennen nebeneinander. Die Antennen haben dabei typischerweise einen jeweiligen festen Abstand zwischen ihren Einkoppelstellen in die Kavität. Wellen mit gleicher Frequenz bilden durch Interferenz eine resultierende Welle. Die Ausbreitungsrichtung lässt sich dabei typischerweise über die Phasenbeziehung der Wellen zueinander einstellen. Durch die Verwendung einer solchen Phased-Array-Antenne kann das Modenmuster in der Kavität eingestellt werden, beispielsweise so, dass ein Gargut gezielt beaufschlagt werden kann. Dies ist grundsätzlich bei zwei Kanälen und mehr möglich. Es können jedoch auch mehr als zwei Kanäle verwendet werden. Trotz erhöhter Komplexität bleibt dabei der Vorteil erhalten, dass die Kanäle zumindest teilweise auf die gleiche Peripherie zurückgreifen können.

Gemäß einer bevorzugten Ausführung weist der Mikrowellengenerator ferner einen Deckel auf, welcher den Mikrowellengenerator zumindest zu einer Seite hin mikrowellendicht abschließt, bevorzugt nach unten. Vorzugsweise besteht der Deckel aus Aluminium, beispielsweise Druckguss, wobei auch andere elektrisch leitfähige und damit schirmende Metalle, Legierungen oder Gemische zum Einsatz kommen können, beispielsweise aus Kunststoffen oder Keramiken mit leitfähigen Füllmitteln. Weiter bevorzugt bildet der Deckel zusammen mit dem Kühlkörper ein Gehäuse des Mikrowellengenerators. Die beschriebenen Ausführungen haben sich insbesondere im Hinblick auf die Mikrowellendichtigkeit als vorteilhaft erwiesen. Außerdem wird eine kompakte und damit einfach handhabbare Bauform erreicht. Zwischen Deckel und Kühlkörper kann man möglicherweise Mikrowellen-Dichtmittel einsetzen, die eine hochfrequenztaugliche, elektrische Verbindung zwischen den Gehäuseteilen sicherstellen.

Die Erfindung betrifft des Weiteren einen Mikrowellenofen, welcher eine Kavität sowie einen Mikrowellengenerator gemäß der Erfindung aufweist. Der Mikrowellengenerator ist dazu ausgebildet, Mikrowellen in die Kavität abzustrahlen. Mittels des erfindungsgemäßen Mikrowellenofens können die weiter oben beschriebenen Vorteile eines erfindungsgemäßen Mikrowellengenerators für einen Mikrowellenofen erreicht werden. Hinsichtlich des Mikrowellengenerators kann dabei auf alle beschriebenen Ausführungen und Varianten zurückgegriffen werden. Erläuterte Vorteile gelten entsprechend.

Unter einer Kavität wird insbesondere ein umschlossener Raum verstanden, in welchen ein Gargut oder ein anderer zu erwärmender Gegenstand eingebracht werden kann. Typischerweise ist eine solche Kavität mikrowellendicht umschlossen, um eine Gefährdung eines Benutzers auszuschließen.

Bei dem Mikrowellenofen kann es sich insbesondere um ein Kombi-Gerät handeln, welches eine Beheizungs-Kombination aus Mikrowellen und konventioneller Widerstandsheizung sein kann. Die Widerstandsheizung kann beispielsweise wie bei einem üblichen Backofen, Dampfgarer oder Grill ausgebildet sein. Insbesondere kann das Gerät als Einbaugerät ausgeführt sein.

Die Kavität weist bevorzugt eine Anzahl von Hohlleitern auf, wobei in jedem Hohlleiter eine der Antennen aufgenommen ist. Dies ermöglicht eine vorteilhafte Einkopplung der Mikrowellen in die Kavität.

Der Mikrowellenofen weist bevorzugt ein Luftleitblech zum Leiten von an einem Kühlkörper des Mikrowellengenerators erwärmter Luft in die Kavität auf. Dabei kann es sich vorzugsweise um den weiter oben bereits erwähnten Kühlkörper des Mikrowellengenerators handeln. Dies ermöglicht eine zusätzliche Heizung des Innenraums der Kavität durch von dem Mikrowellengenerator abgegebene Verlustleistung.

Ein Luftleitblech kann bevorzugt als betätigbare Luftweiche ausgebildet sein, so dass es umschaltbar ist zwischen einer ersten Stellung, in welcher es die Luft in die Kavität leitet, und einer zweiten Stellung, in welcher es die Luft zur Umgebung leitet. Dies ermöglicht es, die Luft nur dann in die Kavität zu führen, wenn sie auch tatsächlich wärmer als der Innenraum der Kavität ist. Insbesondere im Fall einer bereits mittels einer Widerstandsheizung deutlich erwärmten Kavität kann in diesem Fall das Einblasen von kühlerer Luft verhindert werden.

Das Luftleitblech kann insbesondere dazu ausgebildet sein, Luft durch eine Frontblende zur Umgebung hin zu leiten. Damit kann auch eine Kühlung der Frontblende erreicht werden oder in bekannter Weise die Kühlung der Sichtscheibe, beispielsweise über den Venturi-Effekt.

Ein Lüfter des Mikrowellengenerators ist bevorzugt dazu ausgebildet, auch weitere Komponenten des Mikrowellenofens zu kühlen. Hierbei kann es sich insbesondere um Komponenten einer Widerstandsheizung oder einer Steuerung handeln. Damit kann insbesondere ein Lüfter bzw. Tangentiallüfter hierfür eingespart werden. Dies ermöglicht eine einfachere Bauform und damit eine weitere Reduzierung der Kosten der Peripherie des Mikrowellengenerators im Gerät.

Ein Kombigerät kann typischerweise in unterschiedlichen Betriebsarten betrieben werden, beispielsweise nur mit Mikrowellenheizung, nur mit Widerstandsheizung, sei es für erzwungene Konvektion als Heißluft/Umluft, freie Konvektion als Ober-/Unterhitze, Konduktion als heißer Stein/beheiztes Backblech, Dampferzeugung, Strahlung oder kombiniert mit Mikrowellen- und Widerstandsheizung. Grundsätzlich ist auch eine Kombination mit induktiver Beheizung denkbar.

Es sei verstanden, dass alle in dieser Beschreibung oder in der Zeichnung erwähnten oder gezeigten Merkmale auch von eigenständiger erfindungswesentlicher Bedeutung sein können und die Offenbarung dieser Anmeldung auch Mikrowellengeneratoren oder Mikrowellenöfen mit jeweils nur einem solchen Merkmal oder mit einer beliebigen Kombination solcher Merkmale umfasst. Insbesondere ist die oben erläuterte Aufteilung auf zwei Kanäle nicht zwingend erforderlich, um andere, möglicherweise erfindungswesentliche Merkmale auszuführen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Weitere Merkmale und Vorteile wird der Fachmann den nachfolgend mit Bezug auf die in den beigefügten Zeichnungen beschriebenen Ausführungsbeispielen entnehmen, die in den Zeichnungen schematisch dargestellt sind und im Folgenden näher erläutert werden. In den Zeichnungen zeigen:
- Fig. 1:: einen Mikrowellengenerator,
- Fig. 2:: eine Schaltung eines Mikrowellengenerators,
- Fig. 3:: einen Mikrowellenofen und
- Fig. 4:: eine schematische Ansicht einer Phased-Array-Antenne.

### Detaillierte Beschreibung der Ausführungsbeispiele

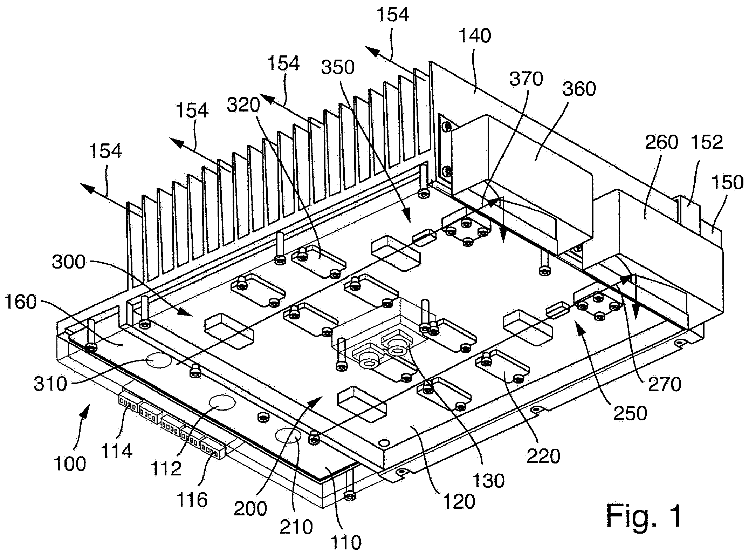

Fig. 1 zeigt einen Mikrowellengenerator 100 gemäß einem Ausführungsbeispiel der Erfindung. Der Mikrowellengenerator 100 weist eine Steuerplatine 110 auf, auf der unter anderem ein Microcontroller 112 zur Steuerung des Mikrowellengenerators 100 angebracht ist. Die Steuerplatine 110 verfügt des Weiteren über einen ersten Anschluss 114 und einen zweiten Anschluss 116. Der erste Anschluss 114 dient dazu, mit weiteren Komponenten eines Mikrowellenofens zu kommunizieren, in welchem der Mikrowellengenerator 100 verwendet wird. Der zweite Anschluss 116 dient als Lüfteranschluss, worauf weiter unten noch ausführlicher eingegangen werden wird.

Der Mikrowellengenerator 100 weist eine Verstärkerplatine 120 auf, die eine Anzahl elektrischer Komponenten beinhaltet, welche weiter unten näher beschrieben werden. Der Mikrowellengenerator 100 weist ferner unterhalb der Verstärkerplatine 120 einen Anschluss 130 für eine Spannungsversorgung für die Komponenten des Mikrowellengenerators 100 auf, welche an einer anderen Position im Gerät angeordnet sein kann.

Oberhalb der Verstärkerplatine 120 ist ein Kühlkörper 140 angeordnet, der unmittelbar auf der Verstärkerplatine 120 aufgebracht ist und mit dieser direkt verbunden ist. Er dient zum Abführen von Wärme, welche von Komponenten erzeugt wird, die auf der Verstärkerplatine 120 angeordnet sind und weiter unten näher beschrieben werden. Der Mikrowellengenerator 100 weist ferner einen Lüfter 150 auf, welcher an dem Kühlkörper 140 über einen Halter 152 angebracht ist. Der Halter 152 besteht vorliegend aus Kunststoff. Der Lüfter 150 ist dazu ausgebildet, einen Luftstrom 154 durch Rippen des Kühlkörpers 140 zu erzeugen und damit das Abführen von Wärme vom Kühlkörper 140 zu verbessern.

In dem Mikrowellengenerator 100 sind ein erster Kanal 200 und ein zweiter Kanal 300 ausgebildet. Die Kanäle 200, 300 sind jeweils zur Erzeugung von Mikrowellen vorgesehen, wobei durch die Mikrowellen insbesondere ein Gargut in einer in Fig. 1 nicht dargestellten Kavität eines Mikrowellenofens, dessen Bestandteil der Mikrowellengenerator 100 sein kann, erhitzt werden kann. Die beiden Kanäle 200, 300 sind identisch aufgebaut und werden nachfolgend detaillierter beschrieben. Dabei wird zunächst der erste Kanal 200 ausführlich beschrieben.

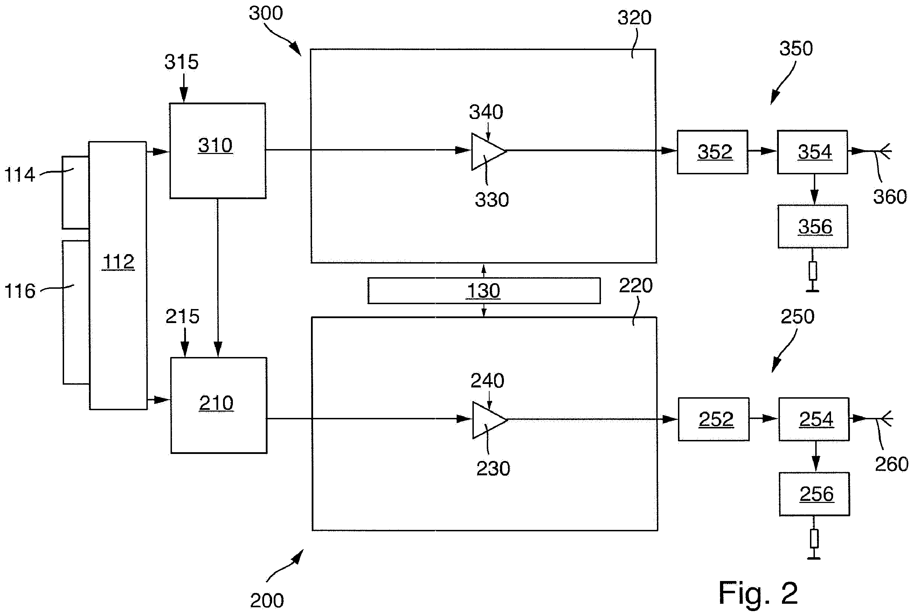

Der erste Kanal 200 weist einen ersten Oszillator 210 auf, welcher auf der Steuerplatine 110 angeordnet ist. Des Weiteren weist er eine erste Verstärkerschaltung 220 auf, welche auf der Verstärkerplatine 120 angeordnet ist. Die erste Verstärkerschaltung 220 wird weiter unten mit Bezug auf Fig. 2 genauer beschrieben werden. Der erste Kanal 200 weist auch eine erste Leistungsmessschaltung 250 auf, welche dazu ausgebildet ist, eine vom ersten Kanal 200 abgegebene Leistung und auch eine reflektierte Leistung zu messen. Auch hierauf wird weiter unten mit Bezug auf Fig. 2 näher eingegangen. Des Weiteren weist der erste Kanal 200 eine erste Antenne 260 auf, welche dazu ausgebildet ist, Mikrowellen abzustrahlen. Hierzu ist die erste Antenne 260 mit der ersten Leistungsmessschaltung 250 und diese wiederum mit der ersten Verstärkerschaltung 220 verbunden. Insgesamt ergibt sich ein erster Pfad 270, welcher die Ausbreitung elektrischer Signale auf den Platinen 110, 120 im ersten Kanal 200 sowie die Abstrahlung von Mikrowellen aus der ersten Antenne 260 beschreibt.

Der zweite Kanal 300 ist identisch zum ersten Kanal 200 aufgebaut. Alle Komponenten des zweiten Kanals 300 sind neben den entsprechenden Komponenten des ersten Kanals 200 angeordnet. So ist ein zweiter Oszillator 310 des zweiten Kanals 300 auf der Steuerplatine 110 angeordnet. Eine zweite Verstärkerschaltung 320 des zweiten Kanals 300 ist auf der Verstärkerplatine 120 angeordnet. Außerdem ist auf der Verstärkerplatine 120 auch eine zweite Leistungsmessschaltung 350 angeordnet. An dem Kühlkörper 140 ist neben der ersten Antenne 260 eine zweite Antenne 360 des zweiten Kanals 300 angeordnet. Elektrische Signale und Mikrowellen beschreiben einen zweiten Pfad 370 entlang des zweiten Kanals 300 und weg von der zweiten Antenne 360.

Der weiter oben bereits beschriebene Lüfter 150 wird an dem zweiten Anschluss 116 der Steuerplatine 110 angeschlossen. Damit wird er mit elektrischer Energie versorgt und kann auch mittels des Microcontrollers 112 ein- und ausgeschaltet sowie in seiner Leistung reguliert werden.

Nach unten hin ist der Mikrowellengenerator 100 durch einen Deckel 160 abgeschlossen. Der Deckel 160 ist eigentlich aus Aluminium-Druckguss hergestellt, ist jedoch in Fig. 1 transparent dargestellt, damit dahinterliegende Komponenten sichtbar sind. Der Deckel 160 bildet zusammen mit dem Kühlkörper 140 ein Gehäuse 140, 160 des Mikrowellengenerators 100, welches diesen bis auf die Antennen 260, 360 mikrowellendicht umschließt.

Die beiden Kanäle 200, 300 sowie weitere Komponenten des Mikrowellengenerators 100 sind in Fig. 2 in einem Schaltbild näher erläutert. Dabei sind auch typische Signalwege mit Pfeilen eingezeichnet. Der Microcontroller 112 ist mit dem ersten Anschluss 114 und dem zweiten Anschluss 116 verbunden, um mit anderen Komponenten eines Mikrowellenofens zu kommunizieren und um den Lüfter 150 zu versorgen und zu steuern. Der Microcontroller 112 ist ferner mit dem ersten Oszillator 210 und dem zweiten Oszillator 310 verbunden. Der erste Oszillator 210 ist mit einer ersten Spannungsquelle 215 verbunden, und der zweite Oszillator 310 ist mit einer zweiten Spannungsquelle 315 verbunden. Die beiden ersten und zweiten Spannungsquellen 215, 315 liefern vorliegend jeweils eine Spannung von 3,3 V als Eingangsspannung für die Oszillatoren 210, 310. Diese Spannungsquellen können ebenfalls im Mikrowellengenerator angeordnet sein, vorzugsweise auf der Steuerplatine. Die Oszillatoren 210, 310 erzeugen ein jeweiliges Ausgangssignal, welches eine bestimmte Frequenz aufweist und an die erste Verstärkerschaltung 220 bzw. an die zweite Verstärkerschaltung 320 weitergegeben wird. Die beiden Oszillatoren 210, 310 sind auch elektrisch unmittelbar miteinander verbunden, so dass über einen dadurch möglichen Austausch von Informationen Frequenz- oder Phasenbeziehungen zueinander eingestellt werden können. Beispielsweise können die Oszillatoren mit einstellbaren unterschiedlichen Frequenzen und/oder einstellbaren unterschiedlichen Phasen betrieben werden. Sie können jedoch auch mit identischer Frequenz und/oder identischer Phase betrieben werden.

Die erste Verstärkerschaltung 220 kann grundsätzlich mit Bauelementen wie Transistoren und/oder Operationsverstärkern aufgebaut sein. Insbesondere kann sie zweistufig ausgebildet sein. Vorliegend ist sie vereinfacht als Operationsverstärker 230 dargestellt, welcher von einer dritten Spannungsquelle 240 versorgt wird. Entsprechend ist die zweite Verstärkerschaltung vorliegend vereinfacht als Operationsverstärker 330 dargestellt, welcher von einer vierten Spannungsquelle 340 versorgt wird. Die dritten und vierten Spannungsquellen 240, 340 werden von der Spannungsversorgung 130 gespeist und liefern vorliegend eine Spannung von jeweils 28 V.

Die erste Verstärkerschaltung 220 verstärkt das vom ersten Oszillator 210 gelieferte Signal und liefert es weiter an die erste Leistungsmessschaltung 250. Entsprechend verstärkt die zweite Verstärkerschaltung 320 das vom zweiten Oszillator 310 gelieferte Signal und liefert es weiter an die zweite Leistungsmessschaltung 350.

Die erste Leistungsmessschaltung 250 weist einen ersten Ausgangsleistungsmesser 252, einen ersten Zirkulator 254 und einen ersten Reflexionsleistungsmesser 256 auf. Der erste Zirkulator 254 ist wiederum mit der ersten Antenne 260 verbunden. Mittels des ersten Ausgangsleistungsmessers 252 kann die von der Verstärkerschaltung 220 abgegebene Leistung ermittelt werden. Diese wird über den ersten Zirkulator 254 zur ersten Antenne 260 geleitet und von dort abgestrahlt. Wenn von der ersten Antenne 260 reflektierte Wellen empfangen werden, so werden diese vom Zirkulator 254 an den ersten Reflexionsleistungsmesser 256 weitergeleitet und danach in einem Lastwiderstand in Form von Wärme dissipiert. Dieser Reflexionsleistungsmesser 256 misst die reflektierte Leistung, so dass aus der Differenz zwischen abgegebener und reflektierter Leistung eine tatsächlich im Gargut verbliebene Leistung berechnet werden kann. Die Leistungsmessung für die vorlaufende und rücklaufende Welle kann grundsätzlich auch in einer kombinierten Leistungsmesseinheit hinter dem Zirkulator 354 erfolgen.

Entsprechend weist die zweite Leistungsmessschaltung 350 einen zweiten Ausgangsleistungsmesser 352, einen zweiten Zirkulator 354 und einen zweiten Reflexionsleistungsmesser 356 auf. Der zweite Zirkulator 354 ist mit der zweiten Antenne 360 verbunden. Die Funktion dieser Komponenten des zweiten Kanals 300 ist identisch zu denjenigen des ersten Kanals, welche zuvor beschrieben wurden.

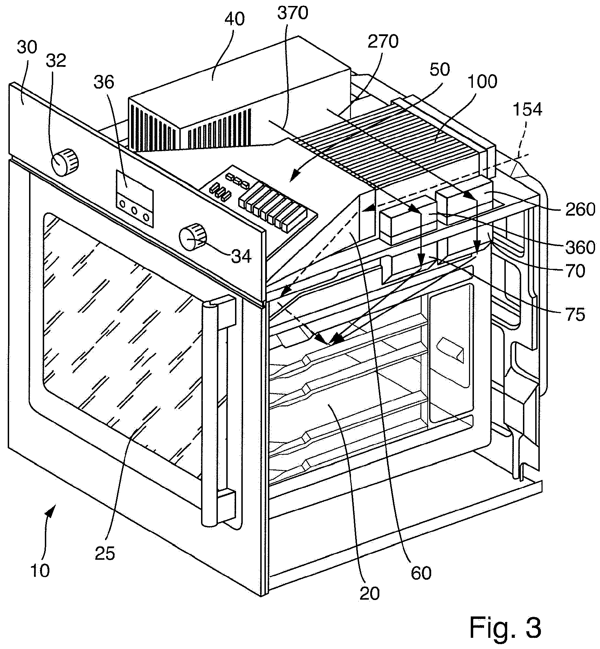

Fig. 3 zeigt einen Mikrowellenofen 10 mit einem Mikrowellengenerator 100, evtl. kann es auch ein sogenanntes Kombi-Gerät sein. Der Mikrowellenofen 10 ist als Kombi-Gerät ausgebildet, was bedeutet, dass er sowohl mit Mikrowellen als auch mit einer konventionellen Widerstandsheizung betrieben werden kann. Der Mikrowellenofen 10 weist eine Kavität 20 auf, welche über eine Tür 25 zugänglich ist. Die Tür 25 kann hierzu geöffnet und geschlossen werden. In die Kavität 20 kann Gargut eingebracht werden, welches mittels des Mikrowellenofens 10 erhitzt werden soll. Der Mikrowellenofen 10 weist eine Frontblende 30 auf mit einem ersten Drehregler 32, einem zweiten Drehregler 34 und einem Display 36. Mittels der Drehregler 32, 34 und des Displays 36 kann ein Benutzer Einstellungen vornehmen, um den Mikrowellenofen 10 zu bedienen und zu verwenden.

Der Mikrowellengenerator 100 ist über der Kavität 20 angeordnet. Zwischen der Frontblende 30 und dem Mikrowellengenerator 100 ist ein Luftleitblech 60 angeordnet, das als steuerbare Luftweiche ausgebildet ist. Es kann den von dem Lüfter 150 des Mikrowellengenerators 100 erzeugten Luftstrom 154 entweder in die Kavität 20 oder durch einen Spalt zwischen der Tür 25 und der Frontblende 30 leiten. Somit kann der Luftstrom 154 in die Kavität 20 geleitet werden, wenn dieser wärmer ist als der Innenraum der Kavität 20, um das Aufheizen zu unterstützen. Ist der Innenraum der Kavität 20 jedoch bereits wärmer als der Luftstrom 154, so kann der Luftstrom nach außen geleitet werden, um die Kavität 20 nicht unnötig abzukühlen. Zur Temperaturmessung können geeignete, nicht dargestellte Temperatursensoren verwendet werden.

Auf dem Luftleitblech 60 ist ein Relaisboard 50 angeordnet, auf welchem diverse Schalter und Steuerungskomponenten für den Mikrowellenofen 10 angebracht sind. Darauf sind insbesondere auch Relais angeordnet, welche eine nicht näher dargestellte Widerstandsheizung des Mikrowellenofens 10 steuern. Das Relaisboard 50 wird durch seine Anordnung auf dem Luftleitblech 60 ebenfalls durch den Luftstrom 154 gekühlt, so dass auf zusätzliche Kühlkomponenten wie beispielsweise einen ansonsten üblichen Tangentiallüfter verzichtet werden kann. Die Frontscheibe kann auf bekannte Weise ebenfalls durch den Lüfter gekühlt werden bei einem Luftauslass zwischen Frontblende 30 und Tür 25.

Die beiden Antennen 260, 360 des Mikrowellengenerators 100 sind in jeweiligen Hohlleitern 70, 75 der Kavität 20 aufgenommen. Dies ermöglicht eine Einkopplung der von den Antennen 260, 360 abgestrahlten Mikrowellen in die Kavität 20, wie dies auch in Fig. 3 anhand der beiden Pfade 270, 370 dargestellt ist, die schon in der Fig. 1 gezeigt sind. Je weiter die Antennen 260, 360 durch die Hohlleiter von der eigentlichen Kavität 20 entfernt sind, desto mehr sind sie und damit der gesamte Mikrowellengenerator 100 von den Einflüssen in der Kavität 20 abgekoppelt. Dort kann es durch die zusätzlichen Beheizungen beispielsweise zu sehr hoher Temperatur oder Luftfeuchtigkeit kommen. Auch Verschmutzungen durch Spritzer des Gargutes sind möglich. An den Verbindungsstellen der Hohlleiter zur Kavität sind daher vorzugsweise Abschirmeinrichtungen angebracht, die zwar Mikrowellen passieren lassen, den Luftaustausch aber verhindern. Hierzu sind beispielsweise Kunststoffe, Gläser, Keramiken oder Glimmer geeignet. Diese Abschirmeinrichtungen verhindern auch, dass Verschmutzungen in den Hohlleiter 70, 75 eintreten, da diese zur Reinigung nur schwer zugänglich wären.

Neben dem Mikrowellengenerator 100 ist ein übliches Netzteil 40 angeordnet, welches den gesamten Mikrowellenofen 10 oder nur den Mikrowellengenerator 100 mit elektrischer Energie versorgt.

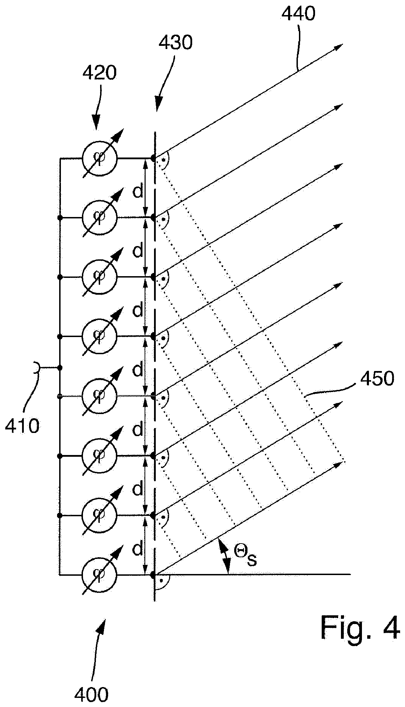

Fig. 4 zeigt schematisch eine Phased-Array-Antenne 400, wie sie beispielsweise in einem Mikrowellenofen verwendet werden kann. Insbesondere kann diese Phased-Array-Antenne 400 in dem Mikrowellenofen aus Fig. 3 verwendet werden. Die Phased-Array-Antenne 400 weist einen Signaleingang 410 auf, an den ein Kanal eines Mikrowellengenerators angeschlossen werden kann. Der Signaleingang 410 ist mit insgesamt acht Phasenschiebern 420 verbunden, von denen jeder wiederum mit einer Antenne 430 verbunden ist. Die insgesamt acht Antennen 430 sind entlang einer Reihe mit einem jeweiligen Abstand angeordnet, der mit d bezeichnet ist. Dieser Abstand d ist identisch bei jeweils zwei benachbarten Antennen 430.

Mittels der Phasenschieber 420 kann für jede der Antennen 430 eine individuelle Phasenverschiebung eingestellt werden. Insbesondere kann auf diese Weise eine Verteilung der Phasen erreicht werden, wobei die Phasenverschiebung zwischen jeweils zwei benachbarten Antennen in einer Richtung um einen konstanten Betrag zunimmt. Die Frequenz der jeweils abgestrahlten Mikrowellen ist hingegen identisch.

Mit einer solchen Phasenverschiebung kann auf bekannte Art und Weise eine Ausbreitungsrichtung von abgestrahlten Wellen 440 eingestellt werden. Die Wellen 440 sind nehmen zu einer Richtung, welche quer zur Reihe der Antennen 430 steht, einen Winkel von θ_{S} ein. Dieser Winkel θ_{S} kann durch unterschiedliche Phasenverschiebungen zwischen jeweils zwei benachbarten Antennen verändert werden. Jeweils quer zu den Wellen 440 verlaufen Wellenfronten 450, deren Winkel zur Reihe der Antennen 430 identisch zum Winkel θ_{S} ist.

Die eben beschriebene Steuerung der Ausbreitungsrichtung der Wellen 440 mittels einer Phasenverschiebung kann insbesondere dazu verwendet werden, bestimmte Gebiete innerhalb einer Kavität gezielt anzustrahlen. Damit kann beispielsweise eine Funktion realisiert werden, in welcher ein Gargut oder auch Teile eines Garguts erkannt werden, beispielsweise mittels einer Kamera oder mittels Auswertung des Mikrowellenreflektionsverhaltens bei gezielt gewählten Einstellungen. Darauf basierend kann gezielt bzw. stärker oder auch schwächer erhitzt werden. Es sei verstanden, dass jede Kombination von einem bestimmten Phasenschieber mit zugehöriger Antenne in diesem Fall als Kanal bezeichnet werden kann, wobei hier alle Kanäle mit der gleichen Frequenz betrieben werden und sich nur die Phasen unterscheiden. Solche Funktionen können ebenso bei Betrieb der Kanäle mit unterschiedlichen Frequenzen eingesetzt werden.

## Patentansprüche

1. Mikrowellengenerator (100) für einen Mikrowellenofen (10), wobei
- der Mikrowellengenerator (100) zumindest einen ersten Kanal (200) und einen zweiten Kanal (300) aufweist,
- der erste Kanal (200) eine erste Verstärkerschaltung (220) und eine daran angeschlossene erste Antenne (260) zur Erzeugung von Mikrowellen mit einer Leistung bis zu maximal einer ersten Teilleistung aufweist,
- der zweite Kanal (300) eine zweite Verstärkerschaltung (320) und eine daran angeschlossene zweite Antenne (360) zur Erzeugung von Mikrowellen mit einer Leistung bis zu maximal einer zweiten Teilleistung aufweist,
- sich eine maximale Gesamtleistung des Mikrowellengenerators (100) aus den Teilleistungen seiner Kanäle (200, 300) zusammensetzt,
- jeder Kanal eine jeweilige Leistungsmessschaltung aufweist zur Messung einer vom Kanal abgegebenen Leistung zum Aufbau einer Regelschleife,
- die Verstärkerschaltungen (220, 320) auf einer gemeinsamen Verstärkerplatine (120) angeordnet sind,
**dadurch gekennzeichnet, dass**
- eine Steuerplatine (110), die Antennen (260, 360) und ein Lüfter (150) an einem Kühlkörper (140) des Mikrowellengenerators (100) montiert sind,
- die Antennen (260, 360) mit den jeweiligen Verstärkerschaltungen (220, 320) direkt ohne Zwischenschaltung von Koaxialsteckern und Koaxialkabeln verdrahtet sind.

2. Mikrowellengenerator (100) nach Anspruch 1, **gekennzeichnet durch** eine Anzahl weiterer Kanäle, wobei jeder weitere Kanal eine jeweilige Verstärkerschaltung und eine jeweilige daran angeschlossene Antenne zur Erzeugung von Mikrowellen mit einer Leistung bis zu maximal einer jeweiligen Teilleistung aufweist.

3. Mikrowellengenerator (100) nach Anspruch 1 oder 2, **dadurch gekennzeichnet, dass** die Verstärkerschaltungen (220, 320) jeweils eine Anzahl von Transistoren (230, 330), insbesondere Leistungstransistoren, zur Erzeugung oder Verstärkung eines die jeweilige Antenne (260, 360) betreibenden Stroms aufweisen.

4. Mikrowellengenerator (100) nach einem der vorhergehenden Ansprüche, **dadurch gekennzeichnet, dass** die Verstärkerplatine (120) unmittelbar an dem Kühlkörper (140) des Mikrowellengenerators (100) montiert ist, vorzugsweise an einer ebenen Unterseite des Kühlkörpers (140).

5. Mikrowellengenerator (100) nach einem der vorhergehenden Ansprüche, **dadurch gekennzeichnet, dass** der Lüfter (150) von einer mit der Verstärkerplatine (120) verbundenen Steuerplatine (110) elektrisch versorgt wird.

6. Mikrowellengenerator (100) nach einem der vorhergehenden Ansprüche, **dadurch gekennzeichnet, dass** Platinen (110, 120) und/oder Antennen (260, 360) direkt an dem Kühlkörper (140) angeschraubt sind, wobei insbesondere Lüfter (150) über einen jeweiligen Halter (152) an dem Kühlkörper (140) befestigt sind.

7. Mikrowellengenerator (100) nach einem der vorhergehenden Ansprüche, **dadurch gekennzeichnet, dass** die Antennen (260, 360) unmittelbar an einem Ende des Kühlkörpers (140) angebracht sind, vorzugsweise direkt bzw. ohne Flanschblech.

8. Mikrowellengenerator (100) nach einem der vorhergehenden Ansprüche, **dadurch gekennzeichnet, dass** er ausgebildet ist die Kanäle (200, 300) mit unterschiedlichen Frequenzen und/oder unterschiedlichen Phasen zu betreiben, wobei insbesondere die Antennen (260, 360) zusammen eine Phased-Array-Antenne (400) bilden und wobei vorzugsweise der Mikrowellengenerator (100) dazu ausgebildet ist, eine Ausbreitungsrichtung von Mikrowellen, welche von der Phased-Array-Antenne (400) abgestrahlt werden, über Phasenbeziehungen der Kanäle (200, 300) zueinander einzustellen.

9. Mikrowellengenerator (100) nach einem der vorhergehenden Ansprüche, **dadurch gekennzeichnet, dass** er einen Deckel (160) aufweist, insbesondere aus Aluminium-Druckguss, welcher den Mikrowellengenerator (100) zumindest zu einer Seite hin mikrowellendicht abschließt, vorzugsweise nach unten, wobei insbesondere der Deckel (160) zusammen mit einem Kühlkörper (140) ein Gehäuse (140, 160) des Mikrowellengenerators (100) bildet.

10. Mikrowellenofen (10), **gekennzeichnet durch**:
- eine Kavität (20), und
- einen Mikrowellengenerator (100) nach einem der vorhergehenden Ansprüche,
wobei der Mikrowellengenerator (100) dazu ausgebildet und in dem Mikrowellenofen angeordnet ist, Mikrowellen in die Kavität (20) abzustrahlen.

11. Mikrowellenofen (10) nach Anspruch 10, **dadurch gekennzeichnet, dass** er ein Luftleitblech (60) zum Leiten von an einem Kühlkörper (140) des Mikrowellengenerators (100) erwärmter Luft in die Kavität (20) aufweist.

12. Mikrowellenofen (10) nach Anspruch 11, **dadurch gekennzeichnet, dass** das Luftleitblech (60) als betätigbare Luftweiche ausgebildet ist, so dass es umschaltbar ist zwischen einer ersten Stellung, in welcher es die Luft in die Kavität (20) leitet, und einer zweiten Stellung, in welcher es die Luft zur Umgebung leitet.

13. Mikrowellenofen (10) nach einem der Ansprüche 10 bis 12, **dadurch gekennzeichnet, dass** ein Lüfter (150) des Mikrowellengenerators (100) dazu ausgebildet ist, auch weitere Komponenten (50) des Mikrowellenofens (10) zu kühlen, insbesondere Komponenten einer Widerstandsheizung oder einer Steuerung des Mikrowellenofens (10).

## Claims

1. Microwave generator (100) for a microwave oven (10), wherein
- the microwave generator (100) has at least one first channel (200) and one second channel (300),
- the first channel (200) has a first amplifier circuit (220) and a first antenna (260), which is connected to said first amplifier circuit, for generating microwaves with a power of up to a maximum of a first partial power,
- the second channel (300) has a second amplifier circuit (320) and a second antenna (360), which is connected to said second amplifier circuit, for generating microwaves with a power of up to a maximum of a second partial power,
- a maximum total power of the microwave generator (100) is made up of the partial powers of the channels (200, 300) of said microwave generator,
- each channel has a respective power measuring circuit for measuring a power which is output by the channel for constructing a control loop,
- the amplifier circuits (220, 320) are arranged on a common amplifier board (120),
**characterized in that**
- a control board (110), further boards, the antennas (260, 360), fans (150) and/or further components are mounted on a heat sink (140) of the microwave generator (100),
- the antennas (260, 360) are directly wired to the respective amplifier circuits (220, 320) without the interconnection of coaxial plugs and coaxial cables.

2. Microwave generator (100) according to claim 1, **characterized by** a number of further channels, with each further channel having a respective amplifier circuit and a respective antenna, which is connected to said respective amplifier circuit, for generating microwaves with a power of up to a maximum of a respective partial power.

3. Microwave generator (100) according to claim 1 or 2, **characterized in that** the amplifier circuits (220, 320) each have a number of transistors (230, 330), in particular power transistors, for generating or amplifying a current which operates the respective antenna (260, 360).

4. Microwave generator (100) according to any of the preceding claims, **characterized in that** the amplifier board (120) is mounted directly on the heat sink (140) of the microwave generator (100), preferably on a flat bottom face of the heat sink (140).

5. Microwave generator (100) according to any of the preceding claims, **characterized in that** the fan (150) is supplied with electrical power by a control board (110) which is connected to the amplifier board (120).

6. Microwave generator (100) according to any of the preceding claims, **characterized in that** boards (110, 120) and/or antennas (260, 360) are screwed directly to the heat sink (140), wherein, in particular, fans (150) are fastened to the heat sink (140) by means of a respective holder (152).

7. Microwave generator (100) according to any of the preceding claims, **characterized in that** the antennas (260, 360) are fitted without intermediate means to one end of the heat sink (140), preferably directly or without a flange plate.

8. Microwave generator (100) according to any of the preceding claims, **characterized in that** it is designed for the purpose of operating the channels (200, 300) at different frequencies and/or with different phases, wherein, in particular, the antennas (260, 360) together form a phased array antenna (400), and wherein the microwave generator (100) preferably is designed for the purpose of setting a propagation direction of microwaves, which are emitted by the phased array antenna (400), by means of phase relationships of the channels (200, 300) with respect to one another.

9. Microwave generator (100) according to any of the preceding claims, **characterized in that** it has a cover (160), in particular composed of diecast aluminum, which closes off the microwave generator (100) such that it is impermeable to microwaves at least on one side, preferably at the bottom, wherein, in particular, the cover (160), together with a heat sink (140), forms a housing (140, 160) of the microwave generator (100).

10. Microwave oven (10), **characterized by**:
- a cavity (20), and
- a microwave generator (100) according to any of the preceding claims, wherein the microwave generator (100) is designed and arranged in the microwave oven for the purpose of emitting microwaves into the cavity (20).

11. Microwave oven (10) according to claim 10, **characterized in that** it has an air guide plate (60) for guiding air, which is heated at a heat sink (140) of the microwave generator (100), into the cavity (20).

12. Microwave oven (10) according to claim 11, **characterized in that** the air guide plate (60) is in the form of an air diverter which can be operated such that it can be switched over between a first position, in which it guides the air into the cavity (20), and a second position, in which it guides the air to the surrounding area.

13. Microwave oven (10) according to any of claims 10 to 12, **characterized in that** a fan (150) of the microwave generator (100) is designed for the purpose of also cooling further components (50) of the microwave oven (10), in particular components of a resistance heater or of a controller of the microwave oven (10).

## Revendications

1. Générateur de micro-ondes (100) destiné à un four à micro-ondes (10), dans lequel
- le générateur de micro-ondes (100) comporte au moins un premier canal (200) et un second canal (300),
- le premier canal (200) comporte un premier circuit amplificateur (220) et une première antenne (260) connectée à celui-ci pour générer des micro-ondes ayant une puissance atteignant au maximum une première puissance partielle,
- le second canal (300) comprend un second circuit amplificateur (320) et une seconde antenne (360) connectée à celui-ci pour générer des micro-ondes ayant une puissance atteignant au maximum une seconde puissance partielle,
- une puissance totale maximale du générateur de micro-ondes (100) se compose des puissances partielles de ses canaux (200, 300),
- chaque canal comporte un circuit de mesure de puissance respectif destiné à mesurer une puissance délivrée par le canal pour établir une boucle de régulation,
- les circuits amplificateurs (220, 320) sont disposés sur une carte amplificatrice commune (120),
**caractérisé en ce que**
- une carte de commande (110), les antennes (260, 360) et un ventilateur (150) sont montés sur un dissipateur thermique (140) du générateur de micro-ondes (100),
- les antennes (260, 360) sont directement reliées par câbles aux circuits amplificateurs (220, 320) respectifs sans interposition de connecteurs coaxiaux et de câbles coaxiaux.

2. Générateur de micro-ondes (100) selon la revendication 1, **caractérisé par** un certain nombre d'autres canaux, dans lequel chaque autre canal comprend un circuit amplificateur respectif et une antenne respective connectée à celui-ci pour générer des micro-ondes ayant une puissance atteignant au maximum une puissance partielle respective.

3. Générateur de micro-ondes (100) selon la revendication 1 ou 2, **caractérisé en ce que** les circuits amplificateurs (220, 320) comportent chacun un certain nombre de transistors (230, 330), en particulier des transistors de puissance, destinés à générer ou amplifier un courant attaquant l'antenne (260, 360) respective.

4. Générateur de micro-ondes (100) selon l'une des revendications précédentes, **caractérisé en ce que** la carte amplificatrice (120) est directement montée sur le dissipateur thermique (140) du générateur de micro-ondes (100), de préférence sur une face inférieure plane du dissipateur thermique (140).

5. Générateur de micro-ondes (100) selon l'une des revendications précédentes, **caractérisé en ce que** le ventilateur (150) est alimenté électriquement par une carte de commande (110) reliée à la carte amplificatrice (120) .

6. Générateur de micro-ondes (100) selon l'une des revendications précédentes, **caractérisé en ce que** des cartes de circuits imprimés (110, 120) et/ou des antennes (260, 360) sont directement vissées sur le dissipateur thermique (140), dans lequel, en particulier, des ventilateurs (150) sont fixés au dissipateur thermique (140) par l'intermédiaire d'un support (152) respectif.

7. Générateur de micro-ondes (100) selon l'une des revendications précédentes, **caractérisé en ce que** les antennes (260, 360) sont directement montées à une extrémité du dissipateur thermique (140), de préférence directement ou sans plaque à bride.

8. Générateur de micro-ondes (100) selon l'une des revendications précédentes, **caractérisé en ce qu'**il est conçu pour attaquer les canaux (200, 300) avec différentes fréquences et/ou différentes phases, dans lequel, en particulier, les antennes (260, 360) forment ensemble une antenne à réseau phasé (400) et dans lequel le générateur de micro-ondes (100) est de préférence conçu pour régler une direction de propagation des micro-ondes rayonnées par l'antenne à réseau phasé (400) par le biais de relations de phase entre les canaux (200, 300).

9. Générateur de micro-ondes (100) selon l'une des revendications précédentes, **caractérisé en ce qu'**il comporte un capot (160), en particulier constitué d'aluminium coulé sous pression, qui ferme au moins d'un côté, de préférence vers le bas, le générateur de micro-ondes (100) en le rendant étanche au micro-ondes, dans lequel le couvercle (160) forme, en particulier, un boîtier (140, 160) du générateur de micro-ondes (100) en association avec un dissipateur thermique (140).

10. Four à micro-ondes (10), **caractérisé par** :
- une cavité (20), et
- un générateur de micro-ondes (100) selon l'une des revendications précédentes,
dans lequel le générateur de micro-ondes (100) est conçu et est disposé dans le four à micro-ondes de manière à rayonner des micro-ondes dans la cavité (20).

11. Four à micro-ondes (10) selon la revendication 10, **caractérisé en ce qu'**il comporte une plaque déflectrice d'air (60) destinée à guider de l'air chauffé depuis un dissipateur thermique (140) du générateur de micro-ondes (100) vers la cavité (20).

12. Four à micro-ondes (10) selon la revendication 11, **caractérisé en ce que** la plaque déflectrice d'air (60) est réalisée sous la forme d'un déflecteur d'air pouvant être actionné de manière à ce qu'il puisse être amené à basculer entre une première position à laquelle il dirige l'air vers la cavité (20) et une seconde position à laquelle il dirige l'air vers l'environnement.

13. Four à micro-ondes (10) selon l'une des revendications 10 à 12, **caractérisé en ce qu'**un ventilateur (150) du générateur de micro-ondes (100) est conçu pour refroidir également des composants supplémentaires (50) du four à micro-ondes (10), en particulier des composants d'un dispositif à résistance chauffante ou d'un dispositif de commande du four à micro-ondes (10).
